# EUROPÄISCHE PATENTSCHRIFT

(11) **EP 1 129 653 B1**
(45) Veröffentlichungstag und Bekanntmachung des Hinweises auf die Patenterteilung: **22.10.2003**
(21) Anmeldenummer: 01103112.7
(22) Anmeldetag: 09.02.2001
(51) Int. Cl.: A47J 31/58, A47J 31/54

(54) **Verfahren und Vorrichtung zur Ermittlung des Verkalkungszustandes von Wassererhitzern in elektrischen Haushaltsgeräten**
Method and device for determining the calcification status of water heaters in electrical household appliances
Méthode et machine pour déterminer l'état de calcification de chauffes-eau utilisés dans des appareils domestiques

(30) Priorität: 03.03.2000 DE 10010488
(43) Veröffentlichungstag der Anmeldung: 05.09.2001
(73) Patentinhaber: BSH Bosch und Siemens Hausgeräte GmbH, 81669 München (DE)
(72) Erfinder: Zinsberger, Alfons, 83410 Laufen (DE); Eggersdorfer, Hermann, Dipl.-Ing (FH), 83308 Trostberg (DE); Beutlrock, Maximilian, 83361 Kienberg (DE)

(56) Entgegenhaltungen:
- EP-A- 0 354 670
- WO-A-99/39619
- US-A- 4 214 148
- US-A- 4 762 055

## Beschreibung

Die Erfindung betrifft ein Verfahren zur Ermittlung des Verkalkungszustandes von Wassererhitzern in elektrischen Haushaltsgeräten, wie insbesondere Kaffe- oder Teemaschinen und dgl., nach dem Oberbegriff des Patentanspruchs 1. Weiterhin betrifft die Erfindung eine Vorrichtung zur Durchführung dieses Verfahrens.

Bei den aus der Praxis bekannten in elektrischen Haushaltsgeräten eingesetzten Wassererhitzern gelangt das Wasser aus einem Vorratsbehälter in den als Durchlauferhitzer ausgebildeten Heizteil, der mittels eines elektrischen Heizelements beheizt wird. Mit dem Heizelement wird das den Durchlauferhitzer durchfließende Wasser auf Siedetemperatur erhitzt, so daß das solchermaßen erhitzte Wasser durch die aufsteigenden Dampfblasen über eine Heißwassersteigleitung zu einem Aufbereitungsteil, beispielsweise dem Filter einer Kaffee- oder Teemaschine gelangt. Das Heizteil bleibt so lange auf Siedetemperatur erhitzt, bis das gesamte Wasser durch die Heißwassersteigleitung abgefloßen ist.

Nach dem Verkochen des gesamten Wasservorrats dient das Heizelement dazu, eine konstante Warmhaltetemperatur zu erzeugen. Da das Heizelement in dieser Phase nicht fortlaufend durch zu erhitzendes Wasser abgekühlt wird, steigt die Temperatur des Heizelements über die Siedetemperatur hinaus. Ein temperaturabhängig arbeitender Ein-Ausschalter sorgt dafür, daß das Heizelement sich nur bis zu einer vorgegebenen Temperatur erhitzt. Danach wird die Stromzufuhr zum Heizelement durch den EIN-/ AUS-Schalter unterbrochen,bis sich das Heizelement wieder bis auf eine vorgegebene Temperatur abgekühlt hat, so daß der Heizprozeß zur Einstellung einer konstanten Warmhaltetemperatur automatisch über den Ein- Ausschalter wieder gestartet werden kann.

Durch die Ablagerung von Kalk an der Innenwand des Durchflußrohres des Durchlauferhitzers wird der Wärmeübergang zwischen dem Heizteil und dem Wasser verschlechtert, so daß im Heizteil eine höhere Temperatur als die normale Siedetemperatur vorliegt, die bereits während der Siedephase zu einem temperaturbedingten Abschalten des Wassererhitzers führen kann, wodurch sich die gesamte Betriebszeit aufgrund der notwendigen Abkühlphasen deutlich verlängert. Die Temperaturerhöhung im Heizteil ist dabei um so höher, je weiter die Verkalkung des Durchflußrohres des Durchlauferhitzers fortschreitet. Aus diesem Grund ist es vorteilhaft, wenn der Verkalkungsgrad erkennbar ist, um rechtzeitig die Verkalkung durch geeignete Maßnahmen zu beseitigen.

Aus der DE 32 23 969 A1 ist ein Wassererhitzer der eingangs genannten Art bekannt, bei dem zur Ermittlung des Verkalkungsgrads des Durchflußrohres des Durchlauferhitzers mittels eines elektronischen Zeitmessers die Zeit zwischen dem Einschalten des Gerätes und dem temperaturbedingten Abschalten nach Abschluß des Brühvorgangs gemessen wird. Aus einem Vergleich dieser gemessenen Ist-Zeit mit einer hinterlegten Soll-Zeit bei unverkalktem Gerät kann dann ermittelt werden, ob und in welchem Maße der Wassererhitzer verkalkt ist, da sich die Brühzeit bei einem verkalkten Gerät deutlich verlängert. Nachteilig bei diesem bekannten Verfahren ist, daß einerseits das Meßintervall zwischen dem Einschalten des Geräts und dem Abschluß des Brühvorgangs sehr lang ist und es andererseits notwendig ist, für verschiedene Wassermengen entsprechende Soll-Zeiten zu ermitteln und zu hinterlegen, wodurch die Möglichkeit einer Fehlbedienung des bekannten Geräts deutlich steigt, da das Gerät vor jeder Inbetriebnahme auf die entsprechende Wassermenge einzustellen ist.

Aus der gattungsgemäßen WO 99/39619 ist eine Kaffeemaschine bekannt, bei der zunächst die Zeitspanne zwischen dem ersten temperaturbedingten Ausschalten des Heizelements und dem ersten Wiedereinschalten (t_{off}) gemessen wird, in einem weiteren Schritt die Zeitspanne zwischen dem folgenden temperaturbedingten Einschalten des Heizelements und dem folgenden Wiederabschalten (tₒₙ) gemessen wird. Im Anschluss wird die ermittelte Ausschaltzeit (t_{off}) in Verhältnis gesetzt zu der folgenden Einschaltdauer (tₒₙ) und mit einem vorgegebenen Sollwert verglichen. Liegt der bestimmte Wert unterhalb dem vorbestimmten Sollwert, wird ein sichtbares Signal gegeben, das den Verkalkungszustand anzeigt.

Davon ausgehend liegt der Erfindung die Aufgabe zugrunde, ein Verfahren zur Ermittlung des Verkalkungszustandes von Wassererhitzern in elektrischen Haushaltsgeräten derart weiterzuentwickeln, daß es einfach und sicher den Verkalkungszustand erfaßt und anzeigt. Ferner liegt der Erfindung die Aufgabe zugrunde, eine Vorrichtung zur Durchführung dieses Verfahrens bereitzustellen.

Die verfahrensgemäße Aufgabenstellung wird erfindungsgemäß durch die im Patentanspruch 1 genannten Merkmale gelöst. Die die vorrichtungsgemäße Lösung darstellenden Merkmale sind im Patentanspruch 2 genannt.

Durch das einfache Erfassen der Zeitspanne zwischen dem ersten temperaturbedingten Ausschalten des Geräts und dem ersten temperaturbedingten Wiedereinschalten nach einer Abkühlphase und dem Vergleich dieser gemessenen Ist-Zeitspanne mit einer hinterlegten Soll-Zeitspanne bei einem unverkalkten Gerät kann erstmalig unabhängig von der zu erhitzenden Wassermenge einfach und schnell ermittelt werden, ob das Durchflußrohr des Durchlauferhitzers verkalkt ist oder nicht. Ein zusätzlicher Vorteil ist die kurze Meßdauer, da sich die Zeitspanne zwischen erstem Ausschalten und erstem Wiedereinschalten bei zunehmender Verkalkung verkürzt.

Vorrichtungsmäßig zeichnet sich die Erfindung dadurch aus, daß es nur eines Bauteils zur Temperaturerfassung am Durchflußrohr des Durchlauferhitzers bedarf, um den Verkalkungszustand zu ermitteln.

Um auch verschiedene Heizleistungen des Durchlauferhitzers zu ermöglichen, wird mit der Erfindung weiterhin vorgeschlagen, daß die hinterlegten Soll-Zeitspannen frei einstellbar sind.

Weitere Merkmale und Vorteile der Erfindung ergeben sich aus der nachfolgenden Beschreibung der zugehörigen Zeichnung, in der die erfindungsgemäße Ausgestaltung eines Wassererhitzers beispielhaft schematisch dargestellt ist. In der Zeichnung zeigt:

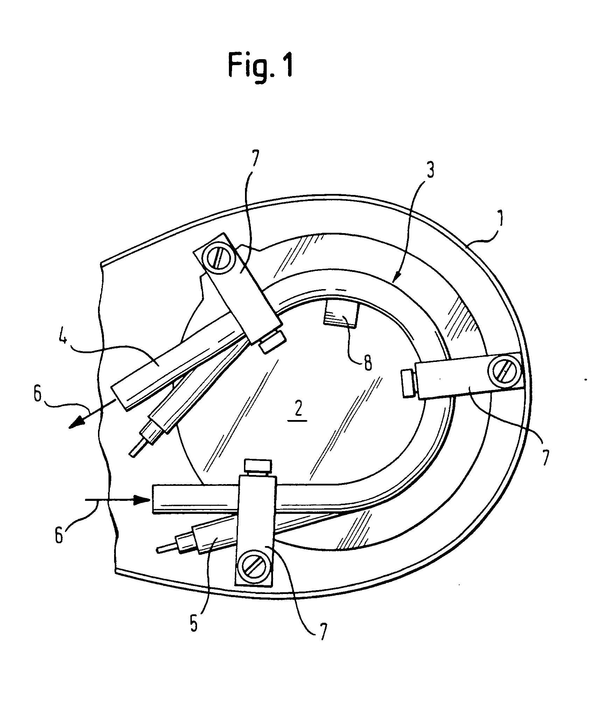

- Fig. 1: eine ausschnittweise Ansicht von unten auf die einen Durchlauferhitzer aufweisende Warmhalteplatte eines Wassererhitzers und
- Fig. 2: ein Diagramm, den Temperaturverlauf am temperaturabhängig arbeitenden Ein- Ausschalter darstellend.

Im Gehäuse 1 eines einen Wassererhitzer aufweisenden elektrischen Haushaltsgeräts, wie beispielsweise einer Kaffeemaschine, ist eine Warmhalteplatte 2 angeordnet.

Unterhalb der Warmhalteplatte 2 ist ein Durchlauferhitzer 3 angeordnet, der aus einem Durchflußrohr 4 für das zu erhitzende Wasser und einem damit verbundenen Heizelement 5 in der Form eines Rohrheizkörpers besteht. Die Durchflußrichtung des Wassers durch das Durchflußrohr 4 des Durchlauferhitzers 3 ist durch Pfeile 6 angedeutet. Der Durchlauferhitzer 3 ist über Befestigungselemente 7 mit der Warmhalteplatte 2 und dem Gehäuse 1 des Gerätes verbunden.

Zum temperaturbedingten Ein- und Ausschalten der Stromzufuhr zum Heizelement 5 des Durchlauferhitzers 3 ist am Durchflußrohr 4 ein temperaturabhängig arbeitender EIN-/AUS-Schalter 8 angeordnet, der die Stromzufuhr zum Heizelement 5 abschaltet, sobald die Temperatur am Durchflußrohr 4 eine vorbestimmte Temperatur überschreitet. Nach einer anschließenden Abkühlphase schaltet der Ein- Ausschalter 8 die Stromzufuhr wieder ein, sobald die Temperatur am Durchflußrohr 4 eine vorgegebene niedrigere Temperatur wieder erreicht hat.

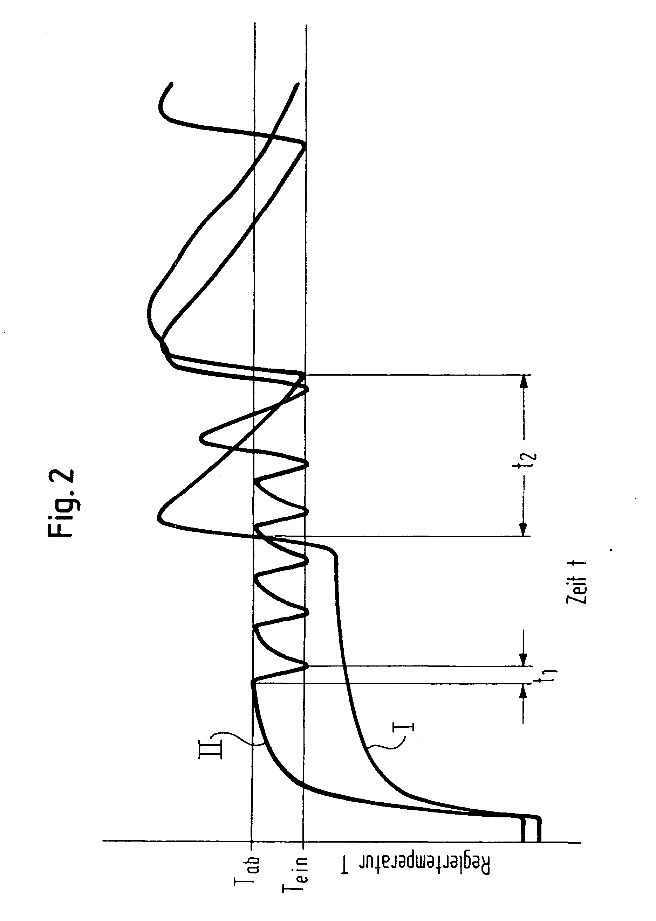

Anhand des Diagramms gemäß Figur 2 wird nachfolgend zunächst die Arbeitsweise des Wassererhitzers im unverkalkten Normalbetrieb erläutert:

Der Temperaturverlauf des unverkalkten Geräts wird in Figur 2 durch den mit I gekennzeichneten Graphen wiedergegeben. Nach dem Einschalten des Heizelements 5 des Durchlauferhitzers 3 wird das im Durchflußrohr 4 befindliche Wasser bis auf die Siedetemperatur erhitzt. Durch die aufsteigenden Dampfblasen steigt das erhitzte Wasser durch die nicht dargestellte Heißwassersteigleitung auf und gelangt von dort in einen Aufbereitungsteil, wie beispielsweise den Filter einer Kaffeemaschine. Dieses Aufheizen des Wassers bis auf die Siedetemperatur wird fortgesetzt, bis der gesamte Wasservorrat durch die Heißwassersteigleitung das Durchflußrohr 4 des Durchlauferhitzers 3 verlassen hat. Im Graphen ist das Ende der Aufbrühphase an dem abrupten Anstieg der Temperaturverlaufskurve nach dem in etwa horizontalen Temperaturkurvenverlauf während der Brühphase zu erkennen.

Da das Durchflußrohr 4 jetzt nicht mehr durch neues kaltes Wasser gekühlt wird, steigt die Temperatur am Durchflußrohr 4 nun schnell an. Bei Erreichen der Temperatur T_{ab} schaltet der Ein- Ausschalter 8 die Stromzufuhr zum Heizelement 5 ab, um ein Überhitzen zu vermeiden. Durch die Umgebungsluft sowie die Abwärme zur Warmhaltung des erhitzten Wassers im Gerät sinkt die Temperatur langsam wieder ab, bis sie die Temperatur Tₑᵢₙ erreicht, ab der der Ein- Ausschalter 8 das Heizelement 5 wieder mit der Stromzufuhr verbindet. Wie aus dem Diagramm gemäß Figur 2 ersichtlich, ergibt sich während der Warmhaltephase ein Taktbetrieb, während dessen der Ein- Ausschalter 8 je nach Temperatur T_{ab} oder Tₑᵢₙ die Stromzufuhr zum Heizelement 5 abschaltet oder wieder freigibt, um eine konstante Warmhaltetemperatur zu erzielen.

Wenn sich nun an der Innenwand des Durchflußrohres 4 des Durchlauferhitzers 3 Kalk abgelagert hat, verschlechtert sich der Wärmeübergang vom Heizelement 5 auf das Wasser im Durchflußrohr 4 derart, daß das Heizelement 5 das Durchflußrohr 4 bereits in der Brühphase so stark erhitzt, daß die Temperatur T_{ab} erreicht wird und der Ein- Ausschalter 8 die Stromzufuhr zum Heizelement 5 abschaltet. Da sich zu dieser Zeit noch Wasser im Durchflußrohr 4 befindet, kühlt sich das Durchflußrohr 4 relativ schnell wieder bis auf die Temperatur Tₑᵢₙ ab, ab der der Ein- Ausschalter 8 das Heizelement 5 wieder mit Strom versorgt, wie dies der mit II gekennzeichnete Graph in Figur 2 zeigt.

In diesem verkalkten Zustand geht der Durchlauferhitzer 3 bereits in der Brühphase in einen Taktbetrieb über, wie dies ebenfalls dem Temperaturkurvenverlauf II zu entnehmen ist. Erst wenn der gesamte Wasservorrat verkocht ist, gleicht sich der Temperaturverlauf II des verkalkten Zustands an den Temperaturverlauf 1 des unverkalkten Normalbetriebs an.

Zur Ermittlung, ob das Durchflußrohr 4 des Durchlauferhitzers 3 verkalkt ist oder nicht, wird die Zeitspanne gemessem, die zwischen dem ersten temperaturbedingten Ausschalten des Heizelements 5 bei Erreichen der Temperatur T_{ab} und dem ersten temperaturbedingten Wiedereinschalten nach einer Abkülphase bei Erreichen der Temperatur Tₑᵢₙ vergeht.

Wie aus Figur 2 ersichtlich, ist diese Zeitspanne t₂ beim unverkalkten Betrieb deutlich länger als die Zeitspanne t₁ im verkalkten Betrieb. Um nun festzustellen, ob das Durchflußrohr 4 verkalkt ist, wird über eine mit dem Ein- Ausschalter verbundene, nicht dargestellte Speicher- und Verarbeitungseinheit die aktuelle Ist-Zeitspanne t₁ gemessen und mit einer abgespeicherten Soll-Zeitspanne t₂ des unverkalkten Geräts verglichen. Sobald die Ist-Zeitspanne t₁ kleiner ist als die Soll-Zeitspanne t₂ steht fest, daß das Durchflußrohr 4 verkalkt ist. Dieses Ergebnis wird dann herangezogen, um eine optische und/oder akustische Anzeige zu aktivieren, die dem Benutzer des Gerätes anzeigt, daß das Gerät entkalkt werden muß. Eine übliche Soll-Zeitspanne t₂ liegt bei etwa einer Minute.

Ein solchermaßen ausgebildeter Wassererhitzer zeichnet sich dadurch aus, daß es zur Ermittlung des Verkalkungszustand nur eines Bauteils, nämlich des Ein-/ Aus-Schalters 8 am Durchflußrohr 4 bedarf, um schnell und sicher festzustellen, ob das Durchflußrohr 4 des Durchlauferhitzers 3 verkalkt ist.

## Patentansprüche

1. Verfahren zur Ermittlung des Verkalkungszustands von Wassererhitzern in elektrischen Haushaltsgeräten, wie beispielsweise Kaffee- oder Teemaschinen, mit einem Durchlauferhitzer (3) und mindestens einem temperaturabhängigen Ein-Ausschalter (8) zum Einhalten einer konstanten Warmhaltetemperatur, mit einem ersten Verfahrensschritt:
a) Messen der Zeitspanne zwischen dem ersten temperaturbedingten Ausschalten eines Heizelements (5) des Durchlauferhitzers (3) und dem ersten Wiedereinschalten nach einer Abkühlphase;
und **gekennzeichnet durch** die weiteren Verfahrensschritte:
b) Vergleichen der gemessenen Ist-Zeitspanne (t₁) mit einer vorgegebenen, frei einstellbaren Soll-Zeitspanne (t₂) und
c) Auslösen einer optischen und/oder akkustischen Anzeige, wenn die gemessene Ist-Zeitspanne (t₁) kürzer ist als die vorgegebene Soll-Zeitspanne (t₂).

2. Vorrichtung zur Durchführung des Verfahrens nach Anspruch 1, mit einem Durchlauferhitzer (3) und mindestens einem temperaturabhängigen Ein-Ausschalter (8) zur Einhaltung einer konstanten Warmhaltetemperatur, sowie mit einer Speicher- und Verarbeitungseinheit zur Erfassung einzelner Ist-Schaltintervalle und Vergleichen dieser gemessenen Werte mit gespeicherten Soll-Schaltintervallen, wobei mittels der Speicher- und Auswerteeinheit als Ist-Schaltintervall die Zeitspanne (t₁) zwischen dem ersten temperaturbedingten Ausschalten eines Heizelements (5) des Durchlauferhitzers (3) und dem ersten Wiedereinschalten nach einer Abkühlphase messbar ist, **dadurch gekennzeichnet, daß** der gemessenen Ist-Zeitspanne (t₁) mit einer vorgegebenen, frei instellbaren Soll-Zeitspanne (t₂) vergleichbar ist, und daß beim Unterschreiten des gespeicherten Soll-Schaltintervalls (Zeitspanne t₂) eine optische und/oder akkustische Anzeige auslösbar ist.

3. Vorrichtung nach Anspruch 2, **dadurch gekennzeichnet, daß** die in der Speicherund Auswerteeinheit gespeicherten Soll-Schaltintervalle (Zeitspannen t₂) frei einstellbar sind.

## Claims

1. Method of determining the calcification state of water heaters in electric domestic appliances, such as, for example, coffee machines or teamakers, with a throughflow heater (3) and at least one temperature-dependent on/off switch (8) for maintaining a constant temperature for keeping warm, comprising a first method step:
a) measuring the time period between the first temperature-induced switching-off of a heating element (5) of the throughflow heater (3) and the first switching-on again after a cooling-down phase;
and **characterised by** the further method steps:
b) comparing the measured actual time period (t₁) with a predetermined, freely settable target time period (t₂) and
c) triggering an optical and/or acoustical indication if the measured actual time period (t₁) is shorter than the predetermined target time period (t₂).

2. Device for carrying out the method according to claim 1, comprising a throughflow heater (3) and at least one temperature-dependent on/off switch (8) for maintaining a constant temperature for keeping warm, as well as a storing and processing unit for detecting individual actual switching intervals and for comparing these measured values with stored target switching intervals, wherein the time period (t₁) between the first temperature-induced switching-off of a heating element (5) of the throughflow heater (3) and the first switching-on again after a cooling-down phase can be measured by means of the storing and processing unit as actual switching interval, **characterised in that** the measured actual time period (t₁) can be compared with a predetermined, freely settable target time period (t₂) and that an optical and/or acoustical indication can be triggered in the case of falling below of the target switching interval (time period t₂).

3. Device according to claim 2, **characterised in that** the target switching intervals (time periods t₂) stored in the storing and processing unit are freely settable.

## Revendications

1. Procédé pour déterminer l'état de calcification de chauffe-eau dans des appareils domestiques électriques, comme par exemple des machines à café ou à thé, comprenant un chauffe-eau instantané (3) et au moins un commutateur marche/arrêt (8) dépendant de la température servant à garder une température de maintien au chaud constante, comprenant une première étape du procédé :
a) Mesure de l'intervalle de temps entre le premier arrêt, déterminé par la température, d'un élément chauffant (5) du chauffe-eau instantané (3) et la première remise en marche après une phase de refroidissement ;
et **caractérisé par** les étapes du procédé suivantes :
b) Comparaison de l'intervalle de temps réel mesuré (t₁) avec un intervalle de temps théorique (t₂) prédéfini pouvant être réglé librement et
c) Déclenchement d'un indicateur visuel et/ou sonore lorsque l'intervalle de temps réel mesuré (t₁) est plus court que l'intervalle de temps théorique (t₂) prédéfini.

2. Dispositif d'exécution du procédé selon la revendication 1, comprenant un chauffe-eau instantané (3) et au moins un commutateur marche/arrêt (8) dépendant de la température, servant à garder une température de maintien au chaud constante, ainsi qu'une unité de mémoire et de traitement servant à la saisie des intervalles de commutation individuels et à la comparaison d e ces valeurs mesurées avec d es intervalles de commutation théoriques mémorisés, l'intervalle de temps (t₁) entre le premier arrêt, déterminé par la température, d'un élément chauffant (5) du chauffe-eau instantané (3) et la première remise en marche après une phase de refroidissement pouvant être mesuré, en tant qu'intervalle de commutation réel, au moyen de l'unité de mémoire et d'analyse, **caractérisé en ce que** l'intervalle de temps réel mesuré (t₁) peut être comparé à un intervalle de temps théorique (t₂) prédéfini pouvant être réglé librement et **en ce qu'**un indicateur visuel et/ou sonore peut être déclenché lorsque le résultat est inférieur à l'intervalle de commutation théorique mémorisé (intervalle de temps t₂).

3. Dispositif selon la revendication 2, **caractérisé en ce que** les intervalles de commutation théoriques (intervalles de temps t₂) mémorisés dans l'unité de mémoire et d'analyse peuvent être réglés librement.
